# EUROPEAN PATENT APPLICATION

(11) **EP 3 623 073 A1**
(43) Date of publication of application: **18.03.2020**
(21) Application number: 17908795.2
(22) Date of filing: 15.11.2017
(51) Int. Cl.: B22C 9/28, B22C 9/00, B22C 9/08

(54) **METHOD FOR MANUFACTURING FORMING MOLD FOR TIRE**

(30) Priority: 09.05.2017 JP 2017093219
(71) Applicant: Bridgestone Corporation, Tokyo 104-8340 (JP)
(72) Inventor: ISHIHARA, Yasuyuki, Tokyo 104-8340 (JP)
(74) Representative: Oxley, Robin John George
(86) International application number: PCT/JP2017/041075
(87) International publication number: WO 2018/207389

(57) **Abstract**

When a mold for a tire is manufactured by casting, generation of a casting defect for the casting of the mold is easily suppressed so that the manufacturing efficiency of the mold is improved.

The mold molds a tire by molding parts arranged along a tire width direction. A width direction of a casting (4) of the mold corresponding to the tire width direction is matched with a vertical direction. A riser (21) is connected to a part of the rear-face part (4B) of the casting (4) located on the rear-face side of the molding part. A chiller (73) is arranged on a part other than the riser (21) of the rear-face part (4B) of the casting (4).

## Description

### BACKGROUND OF THE INVENTION

### Field of the Invention

The present invention relates to a method for manufacturing a mold for tire, in which the mold is manufactured by casting.

### Related Background of the Invention

In the mold for tire, as a shape of a molding part for molding a tire is complicated, plate members (e.g., sipes or blades) which are separately manufactured are sometimes fixed to the molding part.

Because of that, a casting process has been widely adopted for manufacturing the mold. Especially, when a gypsum mold is used, dimensional accuracy can be improved even if the mold is metal (e.g., aluminum alloy) casting having a relatively high melting point. Moreover, in the gypsum mold, cutting and assembling works can be easily carried out and plate members can be easily fixed (cast-in), too. The gypsum mold of a complicated shape can be easily formed by using a rubber mold.

However, in the gypsum mold, solidification of a molten metal is delayed on the gypsum mold side due to its heat conduction property, and thus casting defects (shrinkage cavity etc.) are sometimes generated in the casting of the mold.
For coping with this, generation of casting defects has been conventionally suppressed by chillers and risers. For example, the chillers are each arranged on the lower side or the upper side relative to a gypsum mold and the risers are each arranged on the opposite side to each chiller. Generation of a closed space on the gypsum mold side is suppressed by making molten metal solidify from the chiller toward a riser, and thus casting defects are reduced. Moreover, a casting mold for low pressure casting has been known, in which a die for tire molding and vulcanization is cast by filling molten metal in the mold from the lower side by pressure of gas (cf. Patent Literature 1).

In the conventional casting mold for low pressure casting described in Patent Literature 1, the molten metal is gradually solidified while the molten metal is pushed up through a stalk. However, in the casting mold for low pressure casting, as pathways from the riser in the stalk to the upper end of the casting is elongated, it is difficult to control a solidification direction of the molten metal. Moreover, as parts other than the casting in the die are solidified earlier, it is concerned that a supply of the molten metal to the parts of the casting would be obstructed. When a casting defect is generated, it is required to take countermeasures for the defect (the disposal or repair of casting, etc.), and thus the manufacturing efficiency of the die may be decreased. Therefore, also in a viewpoint of the manufacturing efficiency, it is required to easily suppress generation of the casting defect.

### Prior Art

### Patent Literature

Patent Literature 1: Japanese Patent Laid-Open No. S57-58968

### SUMMARY OF THE INVENTION

### Problems to be Solved by Invention

The present invention has been made in view of the above-described conventional problems and an object thereof is to easily suppress the generation of a casting defect in the casting of the mold when the mold for tire is manufactured by casting, so that the manufacturing efficiency of the mold is improved.

### Means for solving Problems

The present invention is a method for manufacturing a mold for tire by molding parts arranged along a tire width direction, wherein the mold for tire is manufactured by casting. A width direction of a casting of the mold corresponding to the tire width direction is matched with a vertical direction, a riser is connected to a part of a rear-face part of the casting located on a back side of the molding parts and a chiller is arranged on the part other than the riser of the rear -face part.

### ADVANTAGEOUS EFFECTS OF THE INVENTION

According to the present invention, when the mold for tire is manufactured by casting, the generation of the casting defect in the casting of the mold is easily suppressed, and thus the manufacturing efficiency of the mold can be improved.

### BRIEF DESCRIPTION OF THE DRAWINGS

Fig. 1 is a plan view of a mold of a first embodiment;
Fig. 2 is a sectional view of the mold of the first embodiment;
Fig. 3 is a perspective view illustrating a casting of the mold of the first embodiment;
Fig. 4 is a perspective view illustrating a casting device for the mold of the first embodiment;
Fig. 5 is a perspective view illustrating the casting device for the mold of the first embodiment;
Fig. 6 is a perspective view illustrating the casting device for the mold of the first embodiment;
Fig. 7 is a perspective view illustrating the casting device for the mold of the first embodiment;
Fig. 8 is a perspective view illustrating the casting device for the mold of the first embodiment;
Fig. 9 is a sectional view illustrating the casting device for the mold of the first embodiment;
Fig. 10 is a sectional view illustrating a part of the casting device including a storage part for a riser;
Fig. 11 is a perspective view illustrating a molten metal in the casting device of the first embodiment;
Fig. 12 is a perspective view illustrating a cast body of the first embodiment;
Fig. 13 is a perspective view illustrating the cast body of the first embodiment;
Fig. 14 is a perspective view illustrating examples of a conventional cast bodies;
Fig. 15 is a perspective view illustrating a cast body of a second embodiment;
Fig. 16 is a perspective view illustrating the molten metal in the casting device of the second embodiment;
Fig. 17 is a perspective view illustrating a casting of a mold of a third embodiment;
Fig. 18 is a perspective view illustrating a cast body of the third embodiment
Fig. 19 is a perspective view illustrating examples of a conventional cast bodies.

### DESCRIPTION OF THE PREFERRED EMBODIMENTS

An embodiment of a method for manufacturing a mold for tire will be described with reference to the attached drawings.

In the method for manufacturing a mold of the present embodiment, the mold is manufactured by casting, in which the mold having the shape corresponding to the shape of the tire is formed. The mold is a vulcanizing mold for tires and is used at the time of molding of the tire (at the time of vulcanization). The tire is vulcanized while it is molded by the mold.

### (A first embodiment)

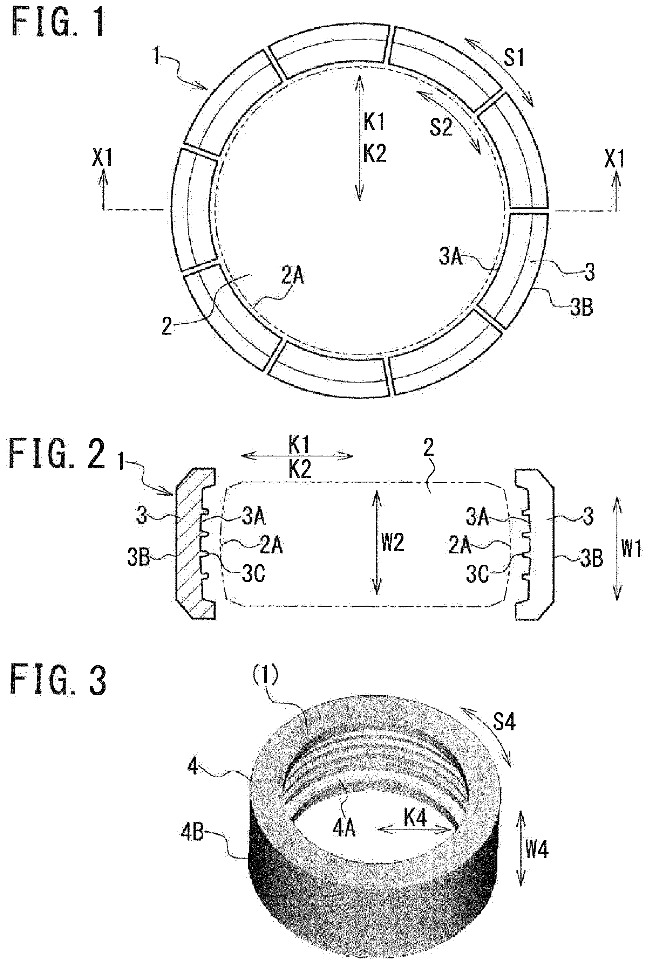

Fig. 1 is a plan view of a mold 1 of the first embodiment and shows the mold 1 viewed from the outside in a width direction of a tire 2. Fig. 2 is a sectional view of the mold 1 of the first embodiment and shows the mold 1 which is cut along the line X1-X1 in Fig. 1. In Figs. 1 and 2, the tire 2 molded by the mold 1 is schematically shown by a dot-dash line.

As illustrated, the mold 1 is a ring-shaped outer die for molding the outside of the tire 2 and is provided in a molding device (vulcanizer) for the tire 2. The mold 1 forms a tread part 2A of the tire 2 while surrounding a ring-shaped tire 2.

With respect to directions of the mold 1 and the tire 2, a width direction (mold width direction W1) of the mold 1 corresponds to the width direction (tire width direction W2) of the tire 2. Moreover, a radial direction (mold radial direction K1) of the mold 1 corresponds to the radial direction (tire radial direction K2) of the tire 2 and a circumferential direction (mold circumferential direction S1) of the mold 1 corresponds to a circumferential direction (tire circumferential direction S2) of the tire 2.

The mold 1 comprises a plurality of (here nine) split molds 3 successively arranged along the tire circumferential direction S2 (mold circumferential direction S1). The plurality of split molds 3 are segments divided in the mold circumferential direction S1 and are tread molds which form the tread part 2A of the tire 2.

In the mold 1, each of the split molds 3 has a molding part 3A formed on the tire 2 side and a rear-face part 3B formed on a rear-face side. In the mold 1 and the split molds 3, the rear-face part 3B is located on the opposite side to the molding part 3A (the outside in the tire radial direction K2 (mold radial direction K1)).

At the time of molding the tire 2, the plurality of split molds 3 are put together into a ring shape with their ends being in contact each other and surround the tire 2. In such state, the mold 1 and the molding parts 3A are arranged along the tire width direction W2 (mold width direction W1). The mold 1 is in contact with the tire 2 (tread part 2A) at the molding parts 3A of split mold 3 and molds the tire 2 with the molding part 3A. The molding part 3A molds recessed parts (e.g., grooves, sipes) on the tread part 2A of the tire 2 with a plurality of projections 3C.

Fig. 3 is a perspective view illustrating a casting 4 of the mold 1 of the first embodiment.

As illustrated, the mold 1 is a die manufactured by metal (e.g., aluminum alloy) casting, and is made from the casting 4. The casting 4 is a product part of a cast body which shall be the mold 1, and is formed by casting. The plurality of split molds 3 are formed, for example, by dividing a ring-shaped casting 4 in a circumferential direction S4 (mold circumferential direction S1). Therefore, the casting 4 of the mold 1 is a material (mold material) of the mold 1 and the split molds 3, and includes a casting of the plurality of split molds 3. The casting 4 is formed into a ring shape, corresponding to a ring-shaped mold 1.

The casting 4 of the mold 1 has a molding part 4A corresponding to the molding part 3A of the mold 1 (split mold 3) and a rear-face part 4B located on the rear-face side of the molding part 3A (molding part 4A).

The molding part 4A is an internal peripheral part of the casting 4, which is formed into a ring shape on the inner part in a radial direction K4 (mold radial direction K1) of the casting 4. The rear-face part 4B is an outer peripheral part of the casting 4 located on the side opposite to the molding part 4A and is formed into a ring shape on an outer part in the radial direction K4 of the casting 4. The rear-face part 4B is a part corresponding to the rear-face part 3B of the mold 1 and is formed on the opposite side (rear face side) of the casting 4 to the molding part 3A (molding part 4A).

A width direction W4 of the casting 4 is a direction corresponding to the mold width direction W1 and the tire width direction W2, and the circumferential direction S4 of the casting 4 is a direction corresponding to the mold circumferential direction S1 and the tire circumferential direction S2.

Moreover, the radial direction K4 of the casting 4 is a direction corresponding to the mold radial direction K1 and the tire radial direction K2. The casting 4 of the mold 1 is cast by a casting device of the mold 1 and is formed integrally with other parts (riser parts etc.). At the time of casting the casting 4, the width direction W4 of the casting 4 is arranged along the vertical direction.

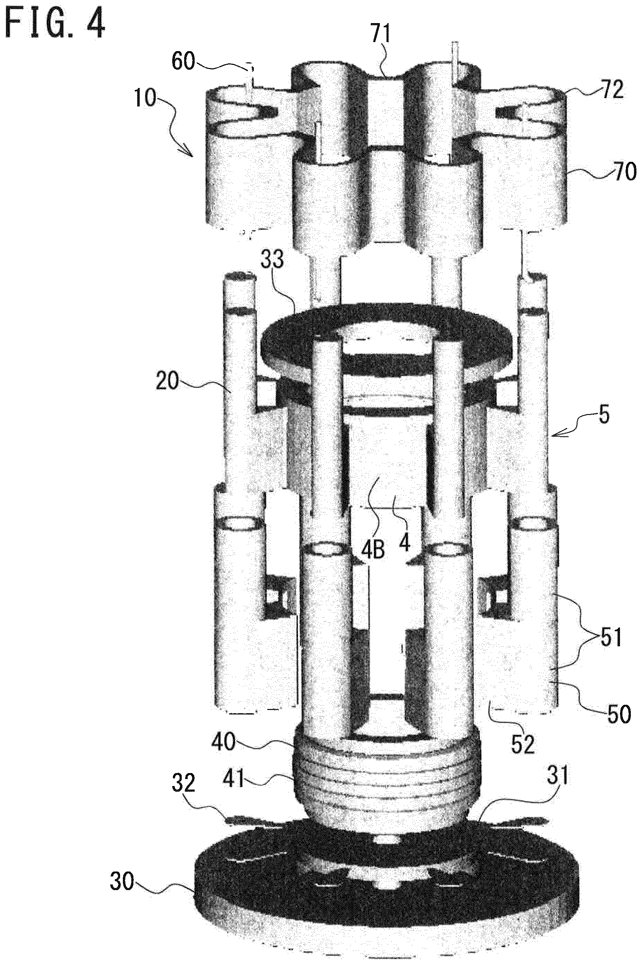

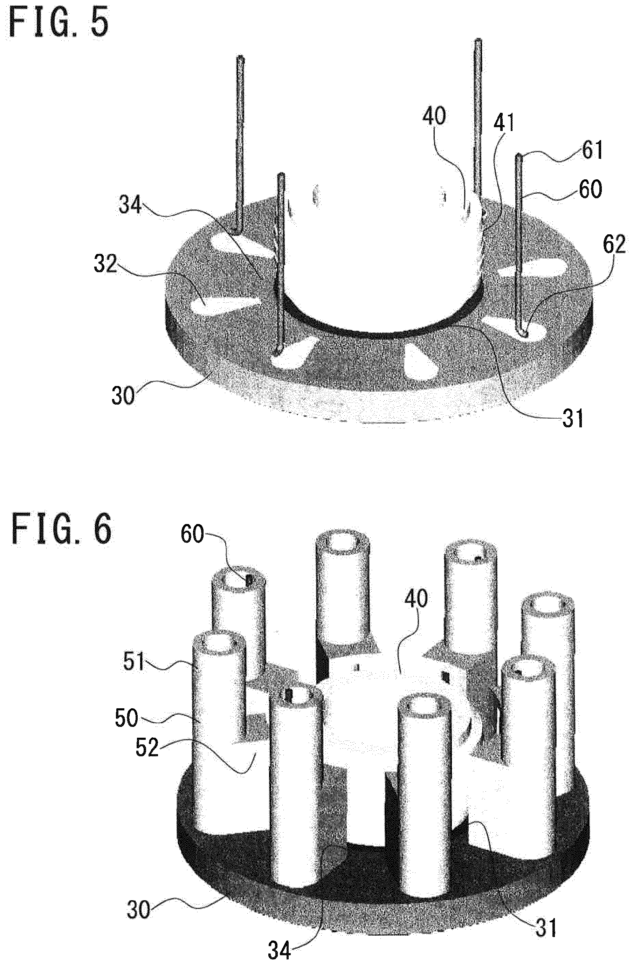

Figs. 4 to 8 are perspective views illustrating a casting device 10 for the mold 1 of the first embodiment. Fig. 4 shows the whole of the casting device 10 which is decomposed, and Figs. 5 to 8 show the casting device 10, wherein each part of which is successively put together with the other part thereof.

As illustrated, the casting device 10 forms a ring-shaped cast body 5 (cf. Fig. 4) including the casting 4 of the mold 1 and a plurality of riser parts 20 by casting (here, gravity casting). The plurality of riser parts 20 are the parts of the risers that are solidified, respectively, and are successively formed along the circumferential direction S4 of the casting 4 and are connected to the rear-face part 4B of the casting 4.

The casting device 10 comprises a disk-shaped table 30, a disk-shaped surface plate 31, a plurality of heat insulation materials 32, a ring-shaped casting mold 40, a plurality of storage parts 50 for the riser and a disk-shaped upper plate 33, a plurality of gate members 60 and a ring-shaped molding flask 70.

The surface plate 31 (cf. Fig. 5) is arranged in the central part of the table 30 and is held by the table 30. The plurality of heat insulation materials 32 are arranged around the surface plate 31 on an upper surface part of the table 30. Moreover, the plurality of heat insulation materials 32 are arranged at equal intervals along an outer peripheral part of the surface plate 31. The casting mold 40 is mounted on the surface plate 31 and is arranged in the central part of the table 30. The plurality of gate members 60 extend upward from the heat insulation materials 32 and are arranged so as to surround the casting mold 40.

The plurality of storage parts 50 (cf. Fig. 6) for the riser are put on the heat insulation materials 32, respectively, and are arranged around the casting mold 40.

Moreover, the plurality of storage parts 50 are arranged at the positions separated from the casting mold 40 and surround the casting mold 40 at the outside of the casting mold 40. Eight storage parts 50 are arranged at equal intervals along an outer peripheral part of the casting mold 40, and the gate members 60 are accommodated within four storage parts 50, respectively.
The storage part 50 accommodating the gate member 60 and the storage part 50 not accommodating the gate members 60 are alternately arranged along the outer peripheral part of the casting mold 40. The outer peripheral part of the casting mold 40 is a mold part 41 to form the molding part 4A of the casting 4, and the storage parts 50 are opposite to the mold part 41 of the casting mold 40.

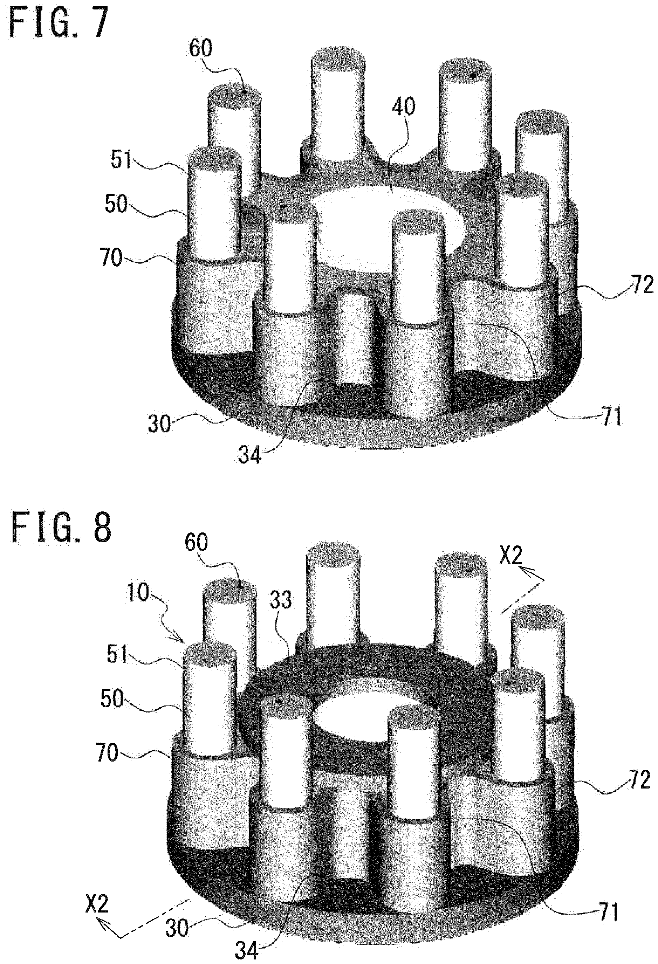

The molding flask 70 (cf. Fig. 4) has a plurality of opposing parts 71 opposite to the mold part 41 of the casting mold 40 and a plurality of projecting parts 72 projecting from the opposing parts 71 towards the opposite side to the casting mold 40.
The opposing parts 71 and the projecting parts 72 are each alternatively formed, and the plurality of the projecting parts 72 project radially. The molding flask 70 (cf. Fig. 7) is mounted on the table 30 and surrounds the casting mold 40 and the plurality of storage parts 50. The whole of the casting mold 40 and the lower parts of the storage parts 50 are accommodated inside the molding flask 70.

The plurality of storage parts 50 are arranged inside the projecting parts 72 of the molding flask 70 and are held in the projecting parts 72, respectively. The opposing part 71 of the molding flask 70 is located between adjacent storage parts 50. The opposing parts 71 of the molding flask 70 and the parts on the casting mold 40 side of the storage parts 50 form a ring-shaped wall part continuing along the outer peripheral part (mold part 41) of the casting mold 40 and are opposite to the mold part 41 of the casting mold 40. The upper plate 33 (cf. Fig. 8) is mounted on the casting mold 40 and the molding flask 70 and brought into contact with the upper end of the casting mold 40 and the opposing parts 71 of the molding flask 70.

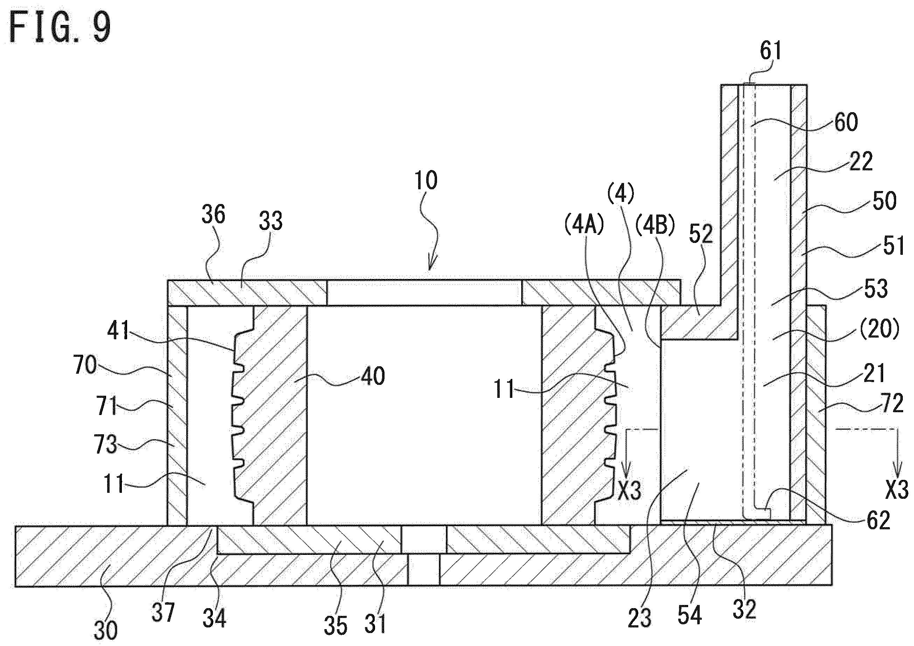

Fig. 9 is a sectional view illustrating the casting device 10 for the mold 1 of the first embodiment and shows the casting device 10 cut along the line X2-X2 in Fig. 8. In Fig. 9, the gate member 60 is schematically shown by a dot-dash line.

As illustrated, the casting device 10 comprises a lower plate 34 consisting of the table 30 and the surface plate 31. The surface plate 31 is accommodated in a recessed part 35 of the table 30, and thus an upper surface of the surface plate 31 and the upper surface of the table 30 are continuous.

The upper plate 33 is arranged above the lower plate 34, and the upper plate 33 and the lower plate 34 are opposite to each other in the vertical direction. The casting mold 40 is a mold member to mold the molding part 4A of the casting 4 by the mold part 41. Moreover, the casting mold 40 is a gypsum mold made of gypsum, and is arranged inside the molding flask 70 and the plurality of storage parts 50 for the riser 21. The mold part 41 of the casting mold 40 is formed in a shape corresponding to the shape of the tire 2 (tread part 2A) formed by the mold 1 and is provided on the outer peripheral part of the casting mold 40.

The casting mold 40, the opposing parts 71 of the molding flask 70 and the parts on the casting mold 40 side of the storage parts 50 are arranged between the lower plate 34 and the upper plate 33. A casting space 11 of the casting 4 is formed by the casting mold 40, the opposing parts 71 of the molding flask 70, the storage parts 50, the lower plate 34 and the upper plate 33.
The casting space 11 is a space to cast the casting 4 of the mold 1, and is formed into a ring shape in the casting device 10. An upper end of the casting space 11 is defined by the upper plate 33, and a lower end of the casting space 11 is defined by the lower plate 34. An internal peripheral part of the casting space 11 is defined by the casting mold 40 (mold part 41), and an outer peripheral part of the casting space 11 is defined by the opposing parts 71 of the molding flask 70 and the storage parts 50.

When the casting 4 of the mold 1 is cast, the molten metal is injected into the casting space 11 by using some storage parts 50 of the plurality of storage parts 50 as injection parts (casting parts) of the molten metal. The injection part of molten metal is the storage part 50 accommodating the tubular gate member 60.

The molten metal is injected into the storage part 50 through the gate member 60 and is stored in the storage part 50. Moreover, the molten metal is injected into the casting space 11 from the storage part 50 and thus is filled in the casting space 11. In the storage part 50 without accommodating the gate member 60, the molten metal is injected into the storage part 50 from the casting space 11 and is stored in the storage part 50.
The molten metal in the plurality of storage parts 50 shall be risers 21 for the casting space 11 and the casting 4.A plurality of risers 21 are successively arranged along the circumferential direction S4 of the casting 4 and are separated from each other in the circumferential direction S4 of the casting 4. Here, eight risers 21 are arranged at equal intervals along the circumferential direction S4 of the casting 4 (circumferential direction of the casting space 11).

The plurality of heat insulation materials 32 are sheet materials having heat insulation characteristics and are provided between the storage parts 50 and the lower plate 34 (here the table 30), respectively. The storage part 50 is a hollow riser cell to store the risers 21 and supplies the casting space 11 with the molten metal of the riser 21. Moreover, the storage part 50 has a cylindrical accommodation part 51 accommodating the riser 21 and a supply part 52 located between the accommodation part 51 and the casting space 11. The accommodation part 51 is arranged upward from the lower plate 34 and projects upward relative to the supply part 52. The supply part 52 connects the accommodation part 51 to the casting space 11 and supplies the riser 21 in the accommodation part 51 towards the casting space 11. The molten metal of the riser 21 is supplied to the casting space 11 through the supply part 52.

The space in the accommodation space 51 is an accommodation part 53 (storage space) which accommodates the riser 21, and the space in the supply part 52 is a supply path 54 (supply passage) of the riser 21. The supply path 54 is located between the accommodation space 53 of the riser 21 and the casting space 11 and is opened towards the accommodation space 53 and the casting space 11. The riser 21 is supplied to the casting space 11 from the accommodation space 53 through the supply path 54.

In the riser 21 stored in the storage part 50, the riser 21 in the storage part 51 (accommodation space 53) is a main body of the riser 21 (riser body 22) and the riser 21 in the supply path 52 (supply passage 54) is a connecting part 23 of the riser 21.
The supply passage 54 and the connecting part 23 are formed along the radial direction K4 of the casting 4. In the storage part 50, the connecting part 23 is located between the riser body 22 and the casting space 11 and connects the riser body 22 to the casting space 11 and supplies the riser 21 (molten metal) of the riser body 22 to the casting space 11.

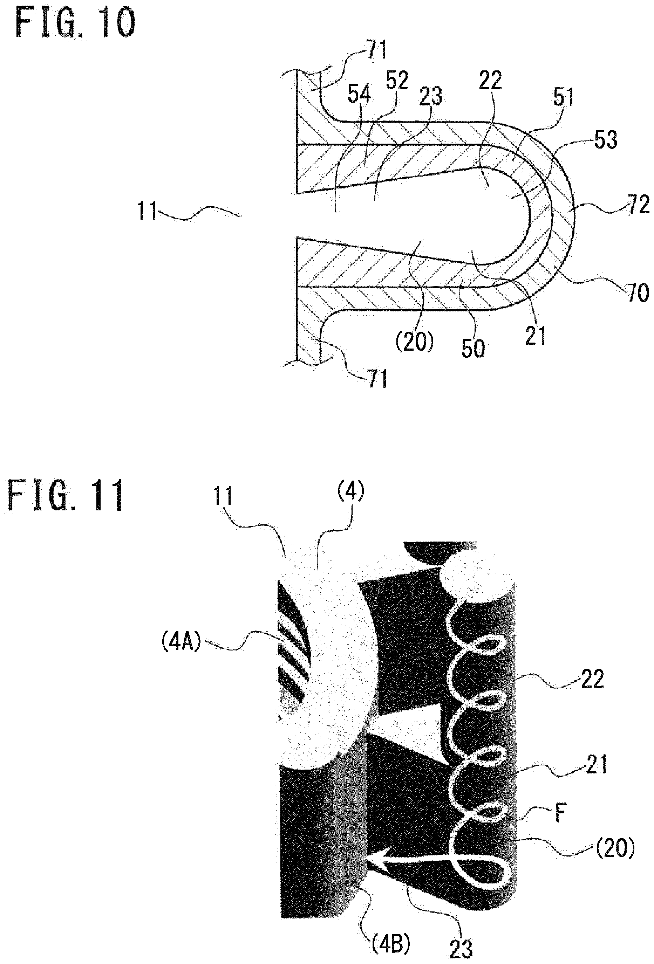

Fig. 10 is a sectional view illustrating a part of the casting device 10 including the storage part 50 for the riser 21 and shows the casting device 10 cut along the line X3-X3 in Fig. 9.

As illustrated, when viewed in a horizontal section, the supply path 54 in the supply part 52 is thinner than the accommodation space 53 in the accommodation part 51, and becomes narrower towards the casting space 11 from the accommodation space 53. The connecting part 23 of the riser 21 becomes thinner (narrower) than the riser body 22 by making the supply path 54 thinner (narrower) than the accommodation space 53.

The upper plate 33, the lower plate 34 and the molding flask 70 (cf. Fig. 9) are made of metal (e.g., steel, cast iron) and are used as chillers 36, 37, 73, respectively. In particular, the upper plate 33 is a chiller 36 on an upper end side (the first chiller) which performs cooling at the upper end of the casting 4, and the lower plate 34 is a chiller 37 on a lower end side (the second chiller) which performs cooling at the lower end of the casting 4.
The opposing part 71 of the molding flask 70 is a chiller 73 on a rear-face side (the third chiller) which performs cooling on the rear-face part 4B of the casting 4, and is arranged between two chillers 36 and 37. When the casting 4 of the mold 1 is cast, the chillers 36, 37 are put on an upper end and a lower end of the casting space 11, so that the chillers 36, 37 are arranged on the upper end and the lower end of the casting 4. Moreover, the chiller 73 is put on a rear-face of the casting space 11, so that the chiller 73 is arranged on a part of the rear-face part 4B of the casting 4.

The upper end and the lower end of the casting space 11 are parts corresponding to the upper end and the lower end of the casting 4, respectively, and the rear-face part of the casting space 11 is a part corresponding to the rear-face part 4B of the casting 4. The chillers 36, 37, 73 made of metal are exposed to the casting space 11 and in contact with the molten metal. The casting 4 of the mold 1 is cast while solidification (cooling) of the molten metal in the casting space 11 is adjusted by the chillers 36, 37, 73.
The upper end of the casting 4 is molded by the chiller 36 (upper plate 33), and the lower end of the casting 4 is molded by the chiller 37 (lower surface 34). Moreover, the molding part 4A of the casting 4 is molded by the mold part 41 of the casting mold 40 and the rear-face part 4B of the casting 4 is molded by the chiller 73 (opposing part 71 of the molding flask 70) and the storage part 50. The storage part 50 is made of materials (e.g., sand, ceramic) having lower heat conductivity than that of the upper plate 33, the lower plate 34 and the molding flask 70.

The molding flask 70 made of metal and the storage part 50 having lower heat conductivity than the molding flask 70 are arranged at the rear-face side of the casting space 11 and thus are arranged on the rear-face part 4B side of the casting 4. When the casting 4 is cast, the riser 21 in the storage part 50 is supplied to a part of the back part of the casting space 11 and thus is connected to a part of the rear-face part 4B of the casting 4. Moreover, a part in contact with the molding flask 70 of the rear-face part 4B is formed by the molding flask 70 while using a part in contact with the rear-face part 4B of the molding flask 70 as the chiller 73. The part in contact with the rear-face part 4B of the molding flask 70 is the opposing part 71 of the molding flask 70. The opposing part 71 (chiller 73) and the storage part 50 (riser 21) are alternately arranged along the rear-face part 4B. Each of the chillers 73 is arranged between two risers 21 (connecting part 23), and each of the risers 21 is arranged between two chillers 73.

When the casting 4 of the mold 1 is cast, the width direction W4 of the casting 4 is matched with the vertical direction and, in the casting device 10, the casting space 11 of the casting 4 is formed in the casting device 10. Moreover, the storage part 50 for the riser 21 is connected to only a part of the rear-face part side of the casting space 11, so that the riser 21 is connected to only a part of the rear-face part 4B of the casting 4.
In the storage part 50, the riser 21 of the riser body 22 is supplied towards the casting space 11 through the connecting part 23 which is thinner than the riser body 22, so that the riser 21 and the riser body 22 are connected to the rear-face part 4B of the casting 4. The chiller 73 (opposing part 71 of the molding flask 70) is put on parts other than the storage part 50 on the rear-face part side of the casting space 11, so that the chiller 73 is arranged on the part other than the riser 21 of the rear-face part 4B of the casting 4. With this, the chiller 73 is arranged on parts other than the connecting part 23 in the rear-face part 4B. In the rear-face part 4B, the chiller 73 is arranged on some part of parts other than the riser 21 and the connecting part 23.

The molten metal is injected into the storage part 50 (accommodation part 51) through the gate member 60 and is injected into the casting space 11 from the storage part 50. The molten metal is injected into the accommodation part 51 (accommodation space 53) and is then injected into the casting space 11 through the supply part 52 (supply path 54). The gate member 60 is a supply pipe for the molten metal accommodated within the accommodation part 51 and is arranged along the vertical direction. An upper end 61 of the gate member 60 is placed at an upper end of the accommodation part 51, and a lower end 62 of the gate member 60 is located at a lower end of the accommodation part 51.

The molten metal is injected into the upper end 61 of the gate member 60 and is then supplied into the storage part 50 from the lower end 62 of the gate member 60. The lower end 62 of the gate member 60 bends towards the side opposite to the casting space 11 (casting 4) and is arranged along a wall surface of the accommodation part 51. By the lower end 62 of the gate member 60, the molten metal is supplied along the wall surface of the accommodation part 51 and flows along the wall surface of accommodation part 51.

Fig. 11 is a perspective view illustrating the molten metal in the casting device 10 of the first embodiment and shows a part of the molten metal in the casting space 11 and the riser 21.

As illustrated, since the molten metal flows along the wall surface of the accommodation part 51 in the storage part 50 accommodating the gate member 60, a swirling current of the molten metal occurs in the riser body 22 in the accommodation part 51 (cf. arrow F). In this way, air bubbles in the molten metal is floated in the riser 21 and separated from the molten metal.

At the time of injection of the molten metal, gas (air etc.) is drawn into the molten metal, and air bubbles are generated in the molten metal. In the molten metal, buoyancy acts on air bubbles. Moreover, by swirling current, a centrifugal force acts on the molten metal, and a power (centripetal force) toward a center of the swirling current acts on air bubbles. Air bubbles move towards the center of the swirling current while being carried by the swirling current. The center of the swirling current is the stagnant portion of the molten metal, and air bubbles are gathered in the center of the swirling current. In the center of the swirling current, air bubbles are floated in the molten metal and thus is separated from the molten metal.

The molten metal is injected into the casting space 11 from the parts of the riser 21 while air bubbles are removed from the molten metal (cf. Fig. 9) and the molten metal is cast in the casting space 11. Moreover, the molten metal is filled in the casting space 11 and the riser 21 is stored in the storage part 50. The molten metal in the casting space 11 is cooled by the chillers 36, 37, 73 and is gradually solidified. On this occasion, the molten metal is supplied into the casting space 11 from the riser 21. The molten metal in the casting space 11 is solidified and thus the casting 4 of the mold 1 is cast. Moreover, the riser 21 in the storage part 50 is solidified, and the solidified riser part 20 is formed in the storage part 50.

Due to heat conduction properties of the casting mold 40 made of gypsum, the solidification of the molten metal is started from the chillers 36, 37, 73 without being started from the casting mold 40 side. On the rear-face part 4B side of the casting 4, the solidification of the molten metal is started from the chiller 73 and progressed towards the casting mold 40. With this, the solidification of the molten metal is progressed in a thickness direction of the casting 4, and molten metal is solidified from the rear-face part 4B of the casting 4 to the molding part 4A. On this occasion, the molten metal is smoothly supplied to the casting space 11 in accordance with solidification of the molten metal by supplying the molten metal of the riser 21 from the rear-face part 4B side. Moreover, the molten metal of the riser 21 is surely supplied because pathways from the riser 21 to the molding part 4A become shorter than ever before. In this way, a casting defect (e.g., shrinkage cavity) occuring in the casting 4 can be retrained. The solidification time of the molten metal is shortened because the solidification of the molten metal is progressed from the position of the chiller 73 to the circumferential direction S4 of the casting 4.

In the upper end side and the lower end side of the casting 4, solidification of the molten metal is started from the chillers 36, 37 and progressed in the width direction W4 of the casting 4. In this way, moreover to the solidification of the molten metal from the rear-face part 4B side, the solidification of the molten metal is progressed along the mold part 41 of the casting mold 40. Therefore, the generation of the casting defect is suppressed while the solidification time of the molten metal is shortened. After solidification of the molten metal in the casting device 10 has been completed, the casting device 10 is dismantled, and the cast body 5 is taken out.

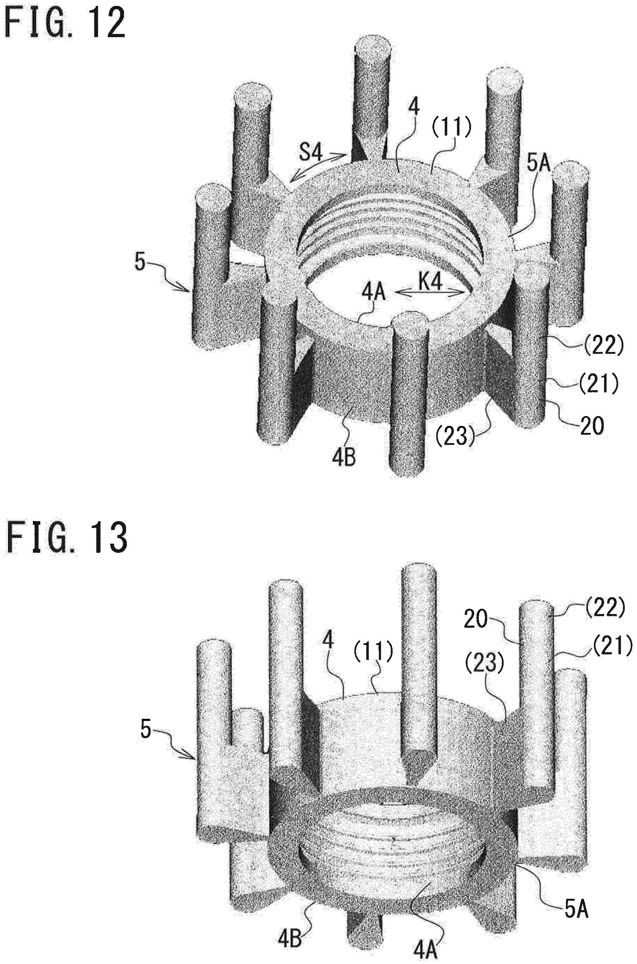

Figs. 12 and 13 are perspective views illustrating the cast body 5 of the first embodiment. Fig. 12 shows the cast body 5 viewed from the upper end side of the riser part 20, and Fig. 13 shows the cast body 5 viewed from the lower end side of the riser part 20.

As illustrated, when the casting 4 of the mold 1 is cast, the ring-shaped casting 4 is cast and the plurality of risers 21 are spaced in the circumferential direction S4 of the casting 4 and are connected to the rear-face part 4B of the casting 4. In this way, the cast body 5 is formed. The cast body 5 is a ring-shaped member 5A and has the plurality of parts of the risers 21 (riser parts 20) which are solidified and the casting 4 of the mold 1. The plurality of riser parts 20 project toward outside in the radial direction K4 of the casting 4 and are formed radially.

After the ring-shaped member 5A (cast body 5) has been formed, an external force is applied to the ring-shaped member 5A and thus the shape of the casting 4 of the mold 1 is corrected by the external force. Here, the casting 4 is deformed by the external force applied to the ring-shaped member 5A and a diameter or roundness of the casting 4 is corrected. For example, by a correction device, an external force in the radial direction K4 is applied to the casting 4 and the diameter or roundness of the casting 4 is changed. In this way, the diameter or roundness of the casting 4 is corrected to a value in the predetermined tolerance level. For example, the correction device is an expansion device (expanders etc.), a compression device or a pressurizing device.

By the correction device (expansion device), an external force is applied outwardly in the radial direction K4 to the casting 4 and the casting 4 (whole or a part) is expanded, so that the diameter of the casting 4 is increased. In contrast, by the correction device (compression device), an external force is applied inwardly in the radial direction K4 to the casting 4, and the casting 4 (whole or a part) is compressed so that the diameter of the casting 4 is reduced. In this way, the diameter or roundness of the casting 4 is corrected.

When the casting 4 is corrected, the ring-shaped casting 4 is reinforced by the plurality of riser parts 20. The casting 4 is thereby accurately corrected while the shape of the molding part 4A of the casting 4 is maintained.

Moreover, the end (upper end, lower end) in the width direction W4 of the casting 4 is suppressed to outwardly expand in the radial direction K4 with respect to the central part in the width direction W4 of the casting 4, and thus the whole of the casting 4 is accurately corrected. After correction of the casting 4, the plurality of riser parts 20 are removed from the ring-shaped member 5A by cutting or the like of the riser parts 20 and thus the casting 4 of the mold 1 is produced. Successively, the plurality of split molds 3 (cf. Fig. 1) of the mold 1 are formed from the casting 4.

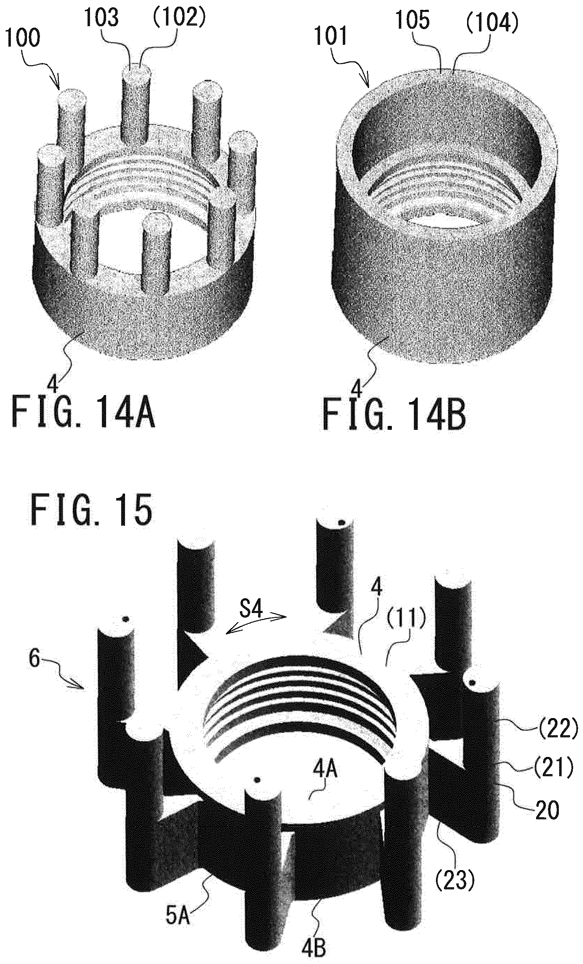

Fig. 14 is a perspective view illustrating examples of the conventional casting bodies 100, 101 and shows two casting bodies 100, 101 including the casting 4 of the mold 1.

As illustrated, in one cast body 100 (cf. Fig. 14A), a plurality of columnar riser parts 103 are formed on the upper end of the casting 4 by solidification of the plurality of risers 102. In the other cast body 101 (cf. Fig. 14B), one ring-shaped riser part 105 is formed on the upper end of the casting 4 by solidification of one riser 104. In the conventional cast bodies 100, 101, the risers 102, 104 are connected to the upper end of the casting 4, and the pathways from the risers 102, 104 to the lower end of the casting 4 are elongated. Therefore, the generation of the casting defect is concerned about, and the solidification time of the molten metal might become longer, too.

In contrast, in the cast body 5 (cf. Fig. 12) of the first embodiment, generation of the casting defect in the casting 4 of the mold 1 is easily suppressed and thus the manufacturing efficiency of the mold 1 can be improved. Moreover, the quality of the casting 4 can be improved and the solidification time of the molten metal can be made shorter than ever before.
The solidification of the molten metal can be easily adjusted by using a part of the molding flask 70 as the chiller 73. As the heat conductivity of the storage part 50 is lower than the heat conductivity of the molding flask 70, the solidification of the risers 21 can be suppressed and thus the molten metal of the risers 21 can be smoothly supplied. The generation of the casting defect (air bubbles defect) can be easily suppressed by separating the air bubbles in the risers 21.

Outflow of air bubbles from the risers 21 is suppressed by making the connecting part 23 of the risers 21 thinner than the riser body 22, so that, in the risers 21, the air bubbles can be certainly separated. Moreover, since the swirling current easily occurs in the riser body 22, air bubbles can be certainly separated in the center of the swirling current. As the volume of the connecting part 23 becomes small, the quantity of the riser 21 can be also reduced. The riser part 20 can be easily removed by separating the riser part 20 from the casting 4 at the position of the connecting part 23.

Next, the other embodiments will be explained. With respect to following other embodiments, description about matters same as those of the first embodiment is omitted and the matters differing from those of the first embodiment will be described.

### (A second embodiment)

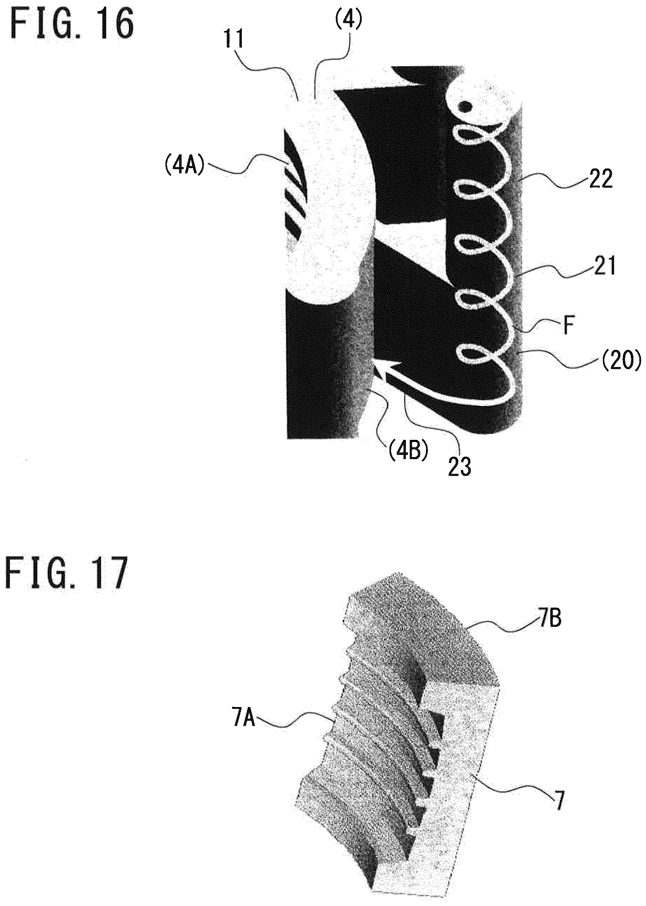

Fig. 15 is a perspective view illustrating a cast body 6 of the second embodiment and shows the cast body 6 as is the case in Fig. 12. Fig. 16 is a perspective view illustrating the molten metal in the casting device 10 of the second embodiment and shows a part of the molten metal and the riser 21 in the casting space 11 as is the case in Fig. 11.

As illustrated, in the supply part 52 of the storage part 50, the supply path 54 and the connecting part 23 are inclined relative to the radial direction K4 of the casting 4. The connecting parts 23 of the plurality of risers 21 are each inclined toward the same side in the circumferential direction S4 of the casting 4 relative to the radial direction K4 of the casting 4, whereby the swirling current easily occurs in the riser body 22 and air bubbles can be certainly separated.

### (A third embodiment)

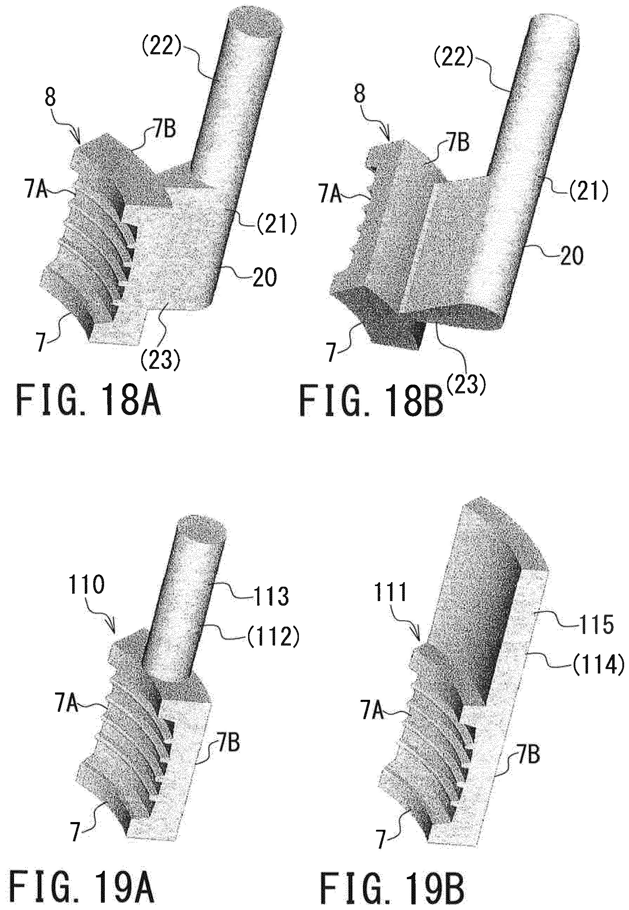

Fig. 17 is a perspective view illustrating a casting 7 of the mold 1 of the third embodiment. Fig. 18 is a perspective view illustrating a cast body 8 of the third embodiment.

As illustrated, the casting 7 is a casting of one split mold 3 of the plurality of split molds 3 (cf. Fig. 1) of the mold 1. Therefore, here, the mold 1 means the split mold 3. The casting 7 of the mold 1 (split mold 3) has a molding part 7A and a rear-face part 7B and is formed into a block shape. The molding part 7A of the casting 7 corresponds to the molding part 4A of the casting 4, and the rear-face part 7B of the casting 7 corresponds to the rear-face part 4B of the casting 4. One riser 21 is connected to a part of the rear-face part 7B, and the chiller is arranged on parts other than the riser 21 of the rear-face part 7B. The molding flask is arranged along both side parts and the rear-face part 7B of the casting 7, and the storage part 50.

Fig. 19 is a perspective view illustrating examples of the conventional cast bodies 110, 111 and shows two cast bodies 110, 111 including the casting 7 of the mold 1.

As illustrated, in one cast body 110 (cf. Fig. 19A), a columnar riser part 113 is formed on the upper end of the casting 7 by solidification of a riser 112. In the other cast body 111 (cf. Fig. 19B), a plate-like riser part 115 is formed on the upper end of the casting 7 by solidification of a riser 114. In the cast body 8 of the casting 7 of the third embodiment, generation of the casting defect can be more easily suppressed than in the conventional cast bodies 110, 111.

As mentioned above, while examples in which the castings 4, 7 are cast by gravity casting has been described, the castings 4, 7 may be cast by low-pressure casting. In the low-pressure casting, the cast bodies 5, 6, 8 are formed into an upside down shape to the shape shown in Fig. 12, Fig. 15, Fig. 18. The molten metal is injected from the parts of each of the risers 21. Moreover, separately from the riser 21, a dam-type sprue runner (runner) is connected to the lower part of the casting 4 and the molten metal may be injected into the casting space 11 and the storage part 50 from the sprue runner.

### (Casting test of the casting)

To confirm an effect of the present invention, a test to cast the casting 4 of the mold 1 was performed by the manufacturing method described above. The examination condition is as follows.
Shape of the casting 4: Ring shape including the casting of nine split molds 3
Dimensions of the casting 4: Inner diameter (ø 600mm), width (300mm), the smallest wall thickness (50mm)
Materials of the casting mold 40: Non-foaming gypsum (product made by Noritake Co., Ltd., product name: G-6)
Materials of the casting 4 (molten metal): Aluminum alloy (AC7A: Japanese Industrial Standards) (4% Mg, 0.2% Si)
Molding flask 70: Ring-shaped molding flask made from spherical black lead cast iron, the height (300mm), the wall thickness (30-50mm)
Materials of the lower plate 34 (table 30, surface plate 31): Steel materials for general structure (SS400: Japanese Industrial Standards)
Materials of the upper plate 33: Steel materials for general structure (SS400: Japanese Industrial Standards)
Materials of the storage part 50: Insulation material (molding product of the ceramic fiber)
Temperature of the molten metal: 670 °C

### (The first embodiment)

In the first embodiment (cf. Fig. 12), eight risers 21 were arranged at equal intervals in the circumferential direction S4 of the casting 4, so that the cast body 5 was formed. The diameter of the riser body 22 was ø 100mm, and the height of the riser body 22 is 600mm. The height of the connecting part 23 of the riser 21 was 270mm, and the width of the part connecting to the rear-face part 4B of the connecting part 23 was 30mm.
Around the riser 21, the storage part 50 (width (110mm)) was arranged. Temperatures of the molding flask 70, the lower plate 34 and the upper plate 33 before injecting the molten metal were room temperatures (approximately 30 °C). The molten metal was injected thorough the dam-type sprue runner and the casting 4 was cast. Injection quantity of the molten metal was 7 kg per one second (7kg/sec). In the casting 4 of the first embodiment, the shrinkage cavity and air bubbles defect were scarcely generated in the casting 4 and thus generation of the casting defect was suppressed. Moreover, it was determined that the quality of the casting 4 was good.

### (A first comparison example)

The first comparison example (cf. Fig. 14A) is a competitive examination to the first embodiment. Eight risers 102 were arranged at equal intervals on the upper end of the casting 4 so that the cast body 100 was formed. The diameter of the riser 102 was ø 90mm, and the height of the riser 102 was 300mm. Other conditions were the same as the conditions in the first embodiment. In the casting 4 of the first comparison example, there were relatively few air bubbles defects, but numerous shrinkage cavities were generated in the molding part 4A of the casting 4. Moreover, it was determined that the quality of the casting 4 was poor. In contrast, the change in the casting defect was not found even if the materials of the upper plate 33 was changed to the insulation material (calcium silicate board) or even if the molding flask was preheated to 250 °C.

### (The second embodiment)

In the second embodiment (cf. Fig. 11), the molten metal was injected from the part of the riser 21 and, in the riser 21, air bubbles were separated from the molten metal by the swirling current. The risers 21 to inject the molten metal were the risers 21 in four storage parts 50 accommodating the gate members 60, respectively.

The injection quantity (total values in four parts) of the molten metal was 16 kg per one second (16kg/sec). Other conditions were the same as the conditions in the first embodiment. In the casting 4 of the second embodiment, the generation of the casting defect (shrinkage cavity, air bubbles defect) was suppressed as with the casting 4 of the first embodiment, and it was determined that its quality was good. Moreover, the generation of air bubbles defect was suppressed more certainly in the casting.

### (A second comparison example)

The second comparison example (cf. Fig. 14A) is a competitive examination to the second embodiment. In contrast to the first comparison example, the molten metal was injected from the parts of four risers 102 so that the cast body 100 was formed. The injection quantity (total values in four parts) of the molten metal was 16 kg per one second (16kg/sec). In the casting 4 of the second comparison example, numerous shrinkage cavities were generated in the molding part 4A of the casting 4 as with the casting 4 of the first comparison example. Moreover, numerous air bubbles defects (ø 0.3 - ø 5mm) were generated in the molding part 4A of the casting 4, and it was determined that the quality of the casting 4 was poor.

### (The third embodiment)

In the third embodiment (cf. Fig. 12), the external force was applied to the ring-shaped member 5A (cast body 5) formed in the second embodiment so that the diameter of the casting 4 was corrected. The correction of the casting 4 was performed while the plurality of riser parts 20 were connected to the casting 4.

Moreover, a force was applied outwardly in the radial direction K4 to the end (upper end, lower end) of the casting 4 so that a diameter of the central part of the casting 4 was increased by approximately 0.4mm. After correction of the casting 4, the plurality of riser parts 20 were removed. In the casting 4 of the third embodiment, a change amount of the radius of the end was bigger by 0.07mm than the change amount of the radius of the central part. As a result, the difference in two change amounts was fallen in the tolerance range.

### (A third comparison example)

The third comparison example (cf. Fig. 12) is a competitive examination to the third embodiment. After the plurality of riser parts 20 were removed from the ring-shaped member 5A formed in the second embodiment, the diameter of the central part of the casting 4 was increased by approximately 0.4mm as with the third embodiment. In the casting 4 of the third comparison example, the change amount of the radius of the end was bigger by 0.21mm than the change amount of the radius of the central part. As a result, the difference in two change amounts is fallen out of the tolerance range.

### Reference Signs List

- 1: mold
- 2: tire
- 3: split mold
- 4: casting
- 5: cast body
- 6: cast body
- 7: casting
- 8: cast body
- 10: casting device
- 11: casting space
- 20: riser part
- 21: riser
- 22: riser body
- 23: connecting part
- 30: table
- 31: surface plate
- 32: insulation material
- 33: upper plate
- 34: lower plate
- 35: recessed part
- 36: chiller
- 37: chiller
- 40: casting mold
- 41: mold part
- 50: storage part
- 51: accommodating part
- 52: supply part
- 53: accommodation space
- 54: supply path
- 60: gate member
- 61: upper end
- 62: lower end
- 70: molding flask
- 71: opposing part
- 72: projecting part
- 73: chiller

## Claims

1. A method for manufacturing a mold for tire by casting, wherein the mold for molding a tire is molded by molding parts arranged along a tire width direction,
the method comprising the steps of;
matching a width direction of a casting of the mold corresponding to the tire width direction with a vertical direction,
connecting a riser to a part of a rear-face part of the casting located on a rear-face side of the molding part, and
arranging a chiller on a part other than the riser of the rear-face part.

2. The method for manufacturing a mold for tire as set forth in claim 1, wherein
chillers are arranged in an upper end and a lower end of the casting of the mold.

3. The method for manufacturing a mold for tire as set forth in claim 1 or claim 2, wherein
a riser body is connected to the rear-face part of the casting through a connecting part which is thinner than the riser body.

4. The method for manufacturing a mold for tire as set forth in any one of claims 1 to 3, wherein
a molding flask made of metal and a storage part for the riser having lower heat conductivity than the molding flask are arranged on the rear-face part side of the casting,
the riser in the storage part is connected to a part of the rear-face part, and
a part in contact with the rear-face part of the molding flask is used as a chiller.

5. The method for manufacturing a mold for tire as set forth in any one of claims 1 to 4, wherein
a molten metal is injected from the part of the riser to cast the casting of the mold and air bubbles in the molten metal are floated in the riser and separated from the molten metal.

6. The method for manufacturing a mold for tire as set forth in any one of claims 1 to 5, wherein
a ring-shaped casting of the mold is cast and a plurality of risers are successively spaced in a circumferential direction of the casting and are connected to the rear-face part of the casting, so that a ring-shaped member which has a plurality of parts of solidified risers and the casting of the mold is formed, and
after the diameter or the roundness of the casting of the mold have been corrected by an external force applied to the ring-shaped member, parts of the plurality of risers are removed from the ring-shaped member.
